# EUROPÄISCHE PATENTSCHRIFT

(11) **EP 1 591 596 B1**
(45) Veröffentlichungstag und Bekanntmachung des Hinweises auf die Patenterteilung: **16.03.2011**
(21) Anmeldenummer: 05102953.6
(22) Anmeldetag: 14.04.2005
(51) Int. Cl.: E04B 1/41, F16B 13/14

(54) **Eingussdübel**
Embedded dowel
Goujon noyé

(30) Priorität: 28.04.2004 DE 102004020852
(43) Veröffentlichungstag der Anmeldung: 02.11.2005
(73) Patentinhaber: HILTI Aktiengesellschaft, 9494 Schaan (LI)
(72) Erfinder: Ayrle, Thomas, 86836, Obermeitingen (DE)
(74) Vertreter: Wildi, Roland

(56) Entgegenhaltungen:
- EP-A2- 0 338 982
- EP-A2- 0 666 427
- DE-A1- 3 535 251
- DE-A1- 4 137 090
- DE-C- 936 082
- FR-A1- 2 701 071

## Beschreibung

### Technisches Gebiet

Die Erfindung betrifft einen Eingussdübel zur gegenseitigen zugfesten Verbindung zweier Festkörper im Beton-Beton-Verbund, der im Oberbegriff des Patentanspruchs 1 genannten Art.

### Stand der Technik

Zum form- und kraftschlüssigen Verbinden eines ersten Festkörpers, beispielsweise eines Altbetons, mit einem fliessfähigen, zeitlich später aushärtenden zweiten Festkörper, beispielsweise eines Neubetons, werden Verbinder oder Eingussdübel mit ihrem Befestigungsteil über eine temporär fliessfähige, aushärtbare Substanz, wie z. B. einem Verguss- oder Reaktionsharzmörtel, in einem Sackloch im ersten Festkörper, befestigt und mit ihrem radial auskragenden Einbettungsteil in dem zweiten Festkörper fliessfähig eingebettet.

Als Verbinder für die beiden Festkörper werden beispielsweise am Einsatzort abgewinkelte oder endseitig konisch aufgestauchte, vorgefertigte oder am Einsatzort gefertigte Bewehrungseisen verwendet. Die Bewehrungseisen werden mittels einer temporär fliessfähigen, aushärtbaren Substanz in Sacklöchern im ersten Festkörper fixiert. Eine allfällige Bewehrung des mit dem ersten Festkörper zu verbindenden zweiten Festkörpers kann an den eingegossenen Bewehrungseisen befestigt werden. Alternativ zu Bewehrungseisen kommen auch Gewindestangen mit verschraubten Kopfplatten zum Einsatz. Nachteilig an diesen bekannten Lösungen ist, dass diese Verbinder bis zum Aushärten der temporär fliessfähigen, aushärtbaren Substanz temporär in der ausgerichteten Position gehalten werden müssen, wobei diese in diesem Zeitraum nicht belastbar sind. Die vorbereitenden Arbeiten, der Setzvorgang sowie die notwendigen Nebenarbeiten sind zeitaufwändig und kostenintensiv.

Aus der DE 31 07 718 A1 ist ein Haltestift aus einem länglichen mit Längsnuten versehenen Rohr bekannt, welches ein verjüngendes Ende aufweist. Der Aussendurchmesser ist grösser als der Durchmesser der Sacklochbohrung ausgebildet. Für ein vereinfachtes Einführen des Haltestifts wird eine Führungsplatte mit einer Öffnung vorgesehen, welche einen kleineren Durchmesser als die Sacklochbohrung aufweist. Das Rohr wird beim Einführen durch die Öffnung der Führungsplatte zusammengedrückt und dehnt sich im Sackloch unter Bildung eines Reibschlusses zwischen dem Rohr und der Wandung des Sacklochs aus. Nachteilig an der bekannten Lösung ist, dass zum Setzen des Haltestifts eine Führungsplatte erforderlich ist. Ohne diese Führungsplatte kann der Haltestift infolge der Reibung an der Wandung des Sacklochs in den meisten Anwendungen nicht ausreichend tief in das Sackloch gesetzt werden.

Aus der DE 22 05 289 A1 ist ein Anker aus Kunststoff zum Setzen in einem mit einer temporär fliessfähigen, aushärtbaren Substanz gefüllten Sackloch bekannt, der an seiner Aussenwandung elastisch verformbare Längsrippen aufweist. Beim Einführen des Ankers in das Bohrloch verklemmen sich die verformbaren Längsrippen mit der Wandung des Bohrlochs. Nachteilig an der bekannten Lösung ist, dass solche Anker aus Kunststoff bis zum Aushärten der Substanz nur geringe Zug- und Druckkräfte übernehmen können.

Aus der DE 100 52 810 A1 ist ein Eingussdübel bekannt, der aus einem umfänglich geschlossenen, teilweise radial eingebeulten Rohrstück gebildet ist. Aus der DE 101 03 231 A1 ist ein ähnlicher Eingussdübel bekannt, der zusätzlich innerhalb des Einbettungsteils eine konusartig ausgeformte Konushülse aufweist. Diese Eingussdübel werden in das Sackloch gesetzt und justiert. Die temporär fliessfähige, aushärtbare Substanz wird nach dem Setzen des Eingussdübels in das Sackloch eingefüllt. Diese Eingussdübel haben sich in der Praxis bewährt. Es besteht jedoch das Bedürfnis, die Eingussdübel vor dem Aushärten der temporär fliessfähigen, aushärtbaren Substanz sofort belasten zu können. Beispielsweise sollen an den Eingussdübeln befestigte Bewehrungen des zweiten Festkörpers sofort begehbar sein, ohne dass das Begehen zu einer Dejustierung der ausgerichteten Eingussdübel im Sackloch während des Aushärtvorgangs der temporär fliessfähigen, aushärtbaren Substanz führt.

### Darstellung der Erfindung

Aufgabe der Erfindung ist es, einen Eingussdübel zu schaffen, der bereits vor dem Einbringen der temporär fliessfähigen, aushärtbaren Substanz und während deren Aushärtung hoch belastbar ist.

Die Aufgabe ist durch die Merkmale des unabhängigen Anspruchs gelöst. Vorteilhafte Weiterbildungen sind in den Unteransprüchen dargelegt.

Gemäss der Erfindung sind an der Aussenseite des Schafts mehrere, zueinander beabstandete und parallel zu der Längsachse des Eingussdübels verlaufende furchende Haltevorsprünge angeordnet.

Die furchenden Haltevorsprünge sind vorzugsweise als Rippen ausgebildet, die eine ausreichende Materialhärte aufweisen, um die Wandung eines Sackloches in dem ersten Festkörper beim Eintreiben des Eingussdübels in dasselbe zu furchen. In Abhängigkeit der Ausgestaltung der Haltevorsprünge weisen diese gegenüber dem Durchmesser des Sacklochs ein Übermass von 0.5 mm bis 6.0 mm auf. Die Haltevorsprünge eines Eingussdübels können unterschiedliche Übermasse aufweisen. Beispielsweise nimmt das Übermass der Haltevorsprünge vom freien Endbereich des Befestigungsteils in Richtung des Einbettungsteils z. B. kontinuierlich zu. Der Schaftdurchmesser des Befestigungsteils ist kleiner als der Durchmesser des Sacklochs gewählt, so dass ein Ringspalt zwischen der Aussenseite des Schafts und der Wandung des Sacklochs im gesetzten Zustand des Eingussdübels gegeben ist. Mit dieser Ausgestaltung des Befestigungsteils des Eingussdübels kann derselbe einfach mittels manueller (z. B. mit einem Hammer) oder mechanischer Schlagenergie (z. B. mit einem elektrischen Bohrhammer) in das Sackloch eingetrieben werden, da im Wesentlichen nur die Haltevorsprünge mit der Wandung des Sacklochs in Kontakt sind. Während dem Eintreiben des Eingussdübels furchen sich die Haltevorsprünge in die Wandung des Sacklochs, womit der Eingussdübel form- und kraftschlüssig im Sackloch gehalten wird. Der Eingussdübel lässt sich bis zum Erreichen der gewünschten Endposition im Sackloch ausrichten. Der Setzvorgang ist absolut unabhängig vom Verfüllvorgang, wobei der Eingussdübel sofort hoch belastbar ist. Die Belastbarkeit des gesetzten Eingussdübels vor dem Verfüllen des Sacklochs mit der temporär fliessfähigen, aushärtbaren Substanz beziehungsweise vor dem Aushärten derselben ist von dem gewählten Übermass der Haltevorsprünge abhängig. Beispielsweise bei einem Übermass von 2.0 mm kann der eingetriebene Eingussdübel bereits mit 150 kg belastet werden, ohne dass dieser infolge der Belastung seine ausgerichtete Position verändert.

Durch die hohlzylindrische Ausgestaltung des Schaftes weist dieser am freien Ende des Befestigungsteils eine Öffnung für die in den Eingussdübel eingefüllte temporär fliessfähige, aushärtbare Substanz auf, welche aus dieser austreten und im Ringspalt zwischen der Aussenseite des Schafts und der Wandung des Sacklochs aufsteigen kann. Da das Sackloch weitgehend vom tiefsten Punkt des Sackloches verfüllt wird, wird die gesamte Luft im Sackloch verdrängt und Lufteinschlüsse werden weitgehend ausgeschlossen. Die an der Oberfläche des ersten Festkörpers austretende, temporär fliessfähige, aushärtbare Substanz dient als Verfüllhilfe und gibt dem Anwender die Gewissheit, dass das Sackloch vollständig verfüllt ist. Es wird nur die benötigte Menge der temporär fliessfähigen, aushärtbaren Substanz in jedem Sackloch eingebracht, was sich infolge der hohen Erstehungskosten für die temporär fliessfähige, aushärtbare Substanz bei den Fertigungskosten pro Sackloch vorteilhaft auswirkt.

Vorzugsweise sind die Haltevorsprünge in Gruppen linear hintereinander liegend angeordnet. Mittels dieser Anordnung ist der Eingussdübel einfach in das Sackloch eintreibbar. Vorteilhaft sind die Haltevorsprünge zur Schaffung eines Zwischenraums zwischen benachbarten Haltevorsprüngen zueinander beabstandet, was das Eintreiben des Eingussdübels zusätzlich vereinfacht, da ein geringerer Bedarf an Schlagenergie zum Eintreiben desselben erforderlich ist.

Bevorzugt sind zumindest drei Gruppen von Haltevorsprüngen an dem Umfang des Schafts des Befestigungsteils radial versetzt angeordnet. Die Gruppen sind vorteilhaft gleichmässig am Umfang angeordnet. Beispielsweise bei drei Gruppen sind diese um 120°, beispielsweise bei vier Gruppen sind diese um 90 ° versetzt am Umfang des Schafts angeordnet. Beim Eintreiben des Eingussdübels wird dieser durch die Haltevorsprünge im Wesentlichen zentrisch im Sackloch ausgerichtet, was einen ausreichenden Ringspalt entlang des gesamten Umfangs des im Sackloch befindlichen Abschnitts des Befestigungsteils für das Aufsteigen der aus dem Eingussdübel austretenden temporär fliessfähigen, aushärtbaren Substanz gewährleistet.

Vorteilhafterweise sind die Gruppen von Haltevorsprüngen axial zu einander versetzt. Da beim Eintreiben nicht alle Haltevorsprünge gleichzeitig mit der Wandung des Sacklochs in Kontakt kommen, weist dieser Eingussdübel ein gutes Eintreibverhalten auf und es muss weniger Schlagenergie zum Eintreiben desselben aufgebracht werden. Sind die Haltevorsprünge einer Gruppe zudem axial zueinander beabstandet bilden die ebenfalls zueinander axial versetzten Zwischenräume eine Führung für die im Ringspalt aufsteigende der temporär fliessfähigen, aushärtbaren Substanz.

Vorzugsweise sind die Haltevorsprünge in Richtung eines freien Endes des Befestigungsteils rampenförmig ausgebildet. Die Haltevorsprünge weisen beispielsweise eine bereichsweise keilförmige Ausgestaltung auf, wobei der Keilwinkel einen Winkel α von 5° bis 90° bezüglich der Schaftoberfläche aufweist. Alternativ weisen die Haltevorsprünge in Richtung eines freien Endes des Befestigungsteils eine bereichsweise konkave oder konvexe Ausgestaltung auf.

Bevorzugt sind an dem Schaft des Befestigungsteils wendelförmig verlaufende Führungselemente vorgesehen. Die Führungselemente unterstützen das Aufsteigen der in den Eingussdübel eingefüllten und durch das offene Ende des Schaftes in das Sackloch austretenden temporär fliessfähigen, aushärtbaren Substanz in dem Ringspalt zwischen der Aussenseite des Schaftes und der Wandung der Sacklochbohrung. Vorteilhaft sind die Führungselemente als durchlaufende Rippen ausgebildet.

Vorteilhafterweise sind die wendelförmig verlaufenden Führungselemente in einem Zwischenraum zwischen benachbarten Haltevorsprüngen einer Gruppe angeordnet. Insbesondere wenn die Gruppen der Haltevorsprünge axial versetzt zueinander an dem Schaft angeordnet sind, ist die Anordnung der Haltevorsprünge vorteilhaft derart gewählt, dass die wendelförmig verlaufenden Führungselemente in einer gleichmässigen Steigung von beispielsweise 10 mm bis 20 mm entlang des einbindbaren Abschnitts des Schaftes verlaufen.

Vorzugsweise sind an dem Schaft des Befestigungsteils im Wesentlichen quer zur Längsachse des Eingussdübels verlaufende Markierungen zur Anzeige einer Einbindetiefe vorgesehen. Eine der Markierungen zeigt die minimale erforderliche Einbindetiefe und zumindest eine zweite, von der ersten Markierung in Richtung des Einbettungsteil des Eingussdübels axial beabstandete Markierung zeigt die maximale Einbindetiefe des Eingussdübels an. Vorteilhaft sind weitere Markierungen zwischen der ersten und der zweiten Markierung vorgesehen, zur Angabe einer gesetzten Einbindetiefe, welche zwischen der minimalen und maximalen Einbindetiefe liegt. Um eine Behinderung der beim Verfüllen des Eingussdübels in dem Ringspalt aufsteigenden temporär fliessfähigen, aushärtbaren Substanz zu vermeiden, sind die Markierungen vorteilhaft als Vertiefungen ausgebildet.

Bevorzugt ist am freien Ende des Befestigungsteils zumindest eine Ausnehmung vorgesehen. Die Ausnehmung ist beispielsweise als quer zur Längsachse des Eingussdübels verlaufender Schlitz ausgebildet. Ist die Öffnung am freien Ende des Schafts beispielsweise durch im Sackloch verbliebenes Bohrmehl verstopft, kann die in den Eingussdübel eingebrachte temporär fliessfähige, aushärtbare Substanz seitlich durch die zumindest eine Ausnehmung austreten.

Vorteilhafterweise ist am freien Endbereich des Befestigungsteils zumindest eine Bohrung vorgesehen. Ist die Öffnung am freien Ende des Schafts beispielsweise durch im Sackloch verbliebenes Bohrmehl verstopft, kann die in den Eingussdübel eingebrachte temporär fliessfähige, aushärtbare Substanz seitlich durch die zumindest eine Bohrung austreten. Vorteilhaft weist der freie Endbereich des Befestigungsteils für den einwandfreien Austritt der temporär fliessfähigen, aushärtbare Substanz aus dem Eingussdübel zwei Ausnehmungen und zwei Bohrungen auf, wobei die Bohrungen vorteilhaft um 90° versetzt zu der Ausrichtung der Ausnehmungen verlaufend am Schaft angeordnet sind.

Vorzugsweise ist der Eingussdübel einteilig gefertigt. Die Formschluss bewirkenden Haltevorsprünge können alternativ an der Aussenseite des Schaftes stoffschlüssig, beispielsweise mittels Schweissen, angeordnet sein. Vorteilhaft ist der Eingussdübel in einem Sandgussverfahren, z. B. mittels getemperten Stahlguss, hergestellt, womit keine weiteren Nacharbeiten beim gefertigten Eingussdübel vor dessen Verwendung erforderlich sind. Zudem weisen die Haltevorsprünge eines Eingussdübels aus Stahlguss eine ausreichende Härte auf, um die Wandung eines Sackloches in einem Festkörper z. B. aus Beton beim Eintreiben des Eingussdübels zu furchen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:

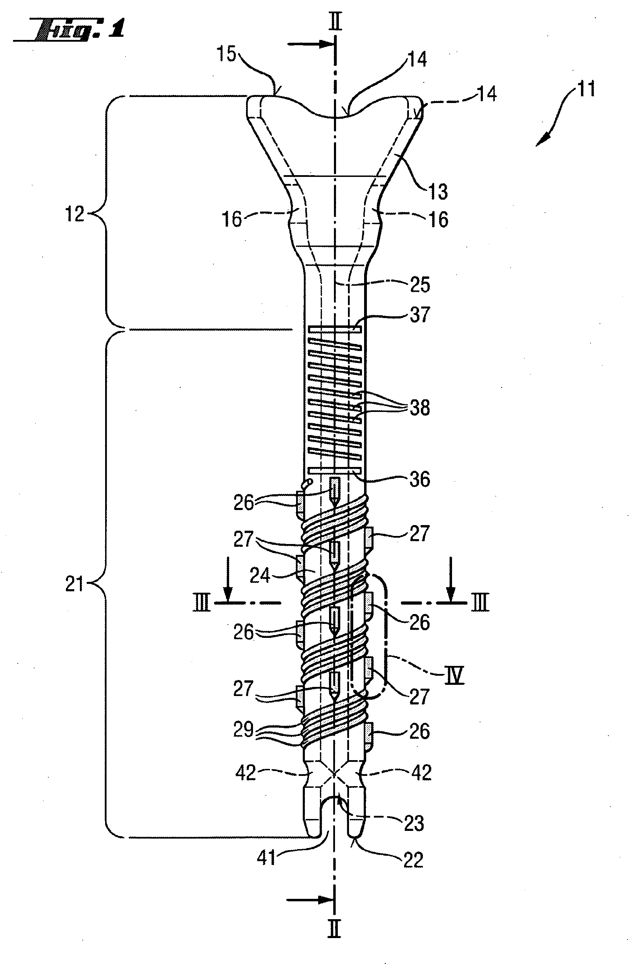

Fig. 1 Eine Seitenansicht auf einen erfindungsgemässen Eingussdübel;
Fig. 2 einen Längsschnitt entlang der Linie II-II in Fig. 1;
Fig. 3 einen Querschnitt entlang der Linie III-III in Fig. 1; und
Fig. 4 einen Detailausschnitt gemäss Detail IV in Fig. 1.

Grundsätzlich sind in den Figuren gleiche Teile mit den gleichen Bezugszeichen versehen.

### Wege zur Ausführung der Erfindung

Der in den Figuren dargestellte, einteilig in einem Sandgussverfahren gefertigte Eingussdübel 11 weist einen Einbettungsteil 12 und einen Befestigungsteil 21 auf. Der Einbettungsteil 12 weist eine konusartig ausgeformte Konushülse 13 auf, die am freien Ende 15 des Einbettungsteils 12 mit Vertiefungen 14 zur Auflage von Bewehrungseisen oder -netzen versehen ist. Zudem sind im Bereich des freien Endes 15 Bohrungen 16 zum Hindurchführen eines Bewehrungseisen vorgesehen.

Das Befestigungsteil 21 ist unter Ausbildung eines Schaftes 24 hohlzylindrisch ausgebildet und weist an seinem freien Ende 22 eine Öffnung 23 für den Austritt einer nach dem Eintreiben des Eingussdübels 11 in demselben eingebrachte temporär fliessfähige, aushärtbare Substanz 4 in das Sackloch 3 auf. Des Weiteren sind am freien Ende 22 zwei schlitzförmige Ausnehmungen 41 und zwei um 90° versetzt zu der Ausrichtung der Ausnehmungen 41 verlaufende Bohrungen 42 vorgesehen, welche auch bei einer Verstopfung der Öffnung 23 den Austritt der temporär fliessfähigen, aushärtbaren Substanz 4 aus dem Schaft 24 ermöglichen.

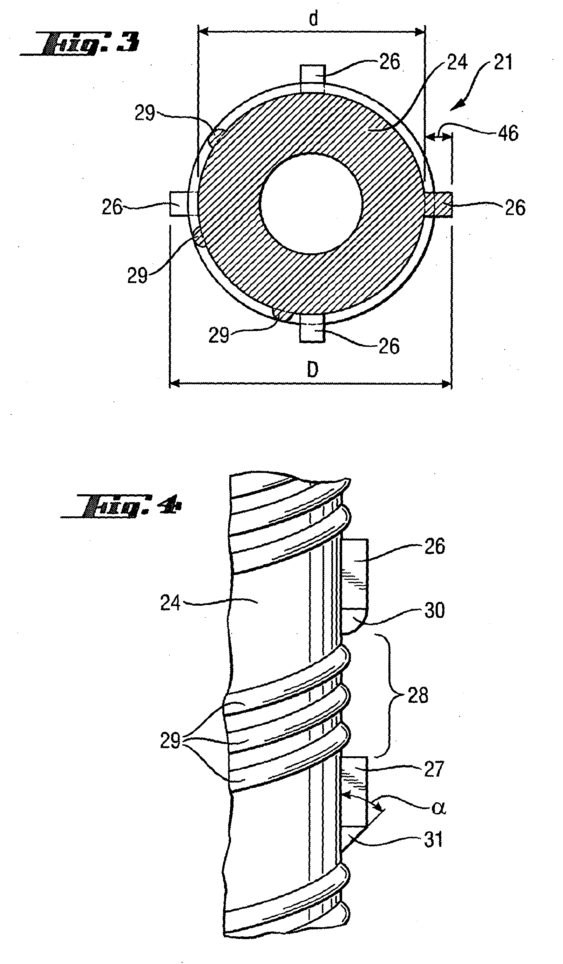

An der Aussenseite des Schaftes 24 sind mehrere, zueinander beabstandete und parallel zu der Längsachse 25 des Eingussdübels 11 verlaufende furchende Haltevorsprünge 26, 27 angeordnet. Die Haltevorsprünge 26, 27 sind in Gruppen linear hintereinander liegend und unter Schaffung eines Zwischenraums 28 (siehe z. B. Fig. 4) zwischen benachbarter Haltevorsprünge 26, 27 zueinander beabstandet. An dem Umfang des Schaftes 24 sind vier Gruppen von linear hintereinander liegenden Haltevorsprüngen 26, 27 radial um 90° und axial zueinander versetzt angeordnet. In den Zwischenräumen 28 zwischen den Haltevorsprüngen 26, 27 verlaufen drei als durchlaufende Rippen ausgebildete, wendelförmig ausgebildete Führungselemente 29. Die einzelnen Gruppen der Haltevorsprüngen 26, 27 sind derart zueinander axial versetzt angeordnet, dass die wendelförmig ausgebildeten Führungselemente 29 eine Steigung von 15 mm aufweisen.

Wie insbesondere in der Fig. 4 ersichtlich ist, sind die Haltevorsprünge 26, 27 in Richtung des freien Endes 22 des Befestigungsteils 21 rampenförmig ausgebildet. Der Haltevorsprung 26 weist in diesem Ausführungsbeispiel einen konvex ausgebildeten Abschnitt 30 auf. Der Haltevorsprung 27 weist einen keilförmigen Abschnitt 31 auf, der gegenüber der Oberfläche des Schaftes 24 in einem Winkel α von 45°geneigt ist.

An dem Schaft 24 des Befestigungsteils 21 sind jeweils quer zur Längsachse 25 des Eingussdübels verlaufende Markierungen 36, 37 vorgesehen, wobei die erste, in Richtung des freien Endes 22 des Befestigungsteils 21 liegende Markierung 36 die minimale Einbindetiefe des Eingussdübels 11 in dem ersten Festkörper 1 und die axial zu der ersten Markierung 36 beabstandete zweite Markierung 37 die maximale Einbindetiefe des Eingussdübels 11 in dem ersten Festkörper 1 angibt. Zwischen der ersten Markierung 36 und der zweiten Markierung 37 sind weitere, leicht gegenüber der ersten Markierung 36 beziehungsweise der zweiten Markierung 37 geneigt verlaufende Markierungen 38 als Orientierungshilfe der gesetzten Einbindetiefe des Eingussdübels 11 in dem ersten Festkörper 1 vorgesehen. Die Markierungen 36, 37, 38 sind als Vertiefungen am Schaft 24 ausgebildet.

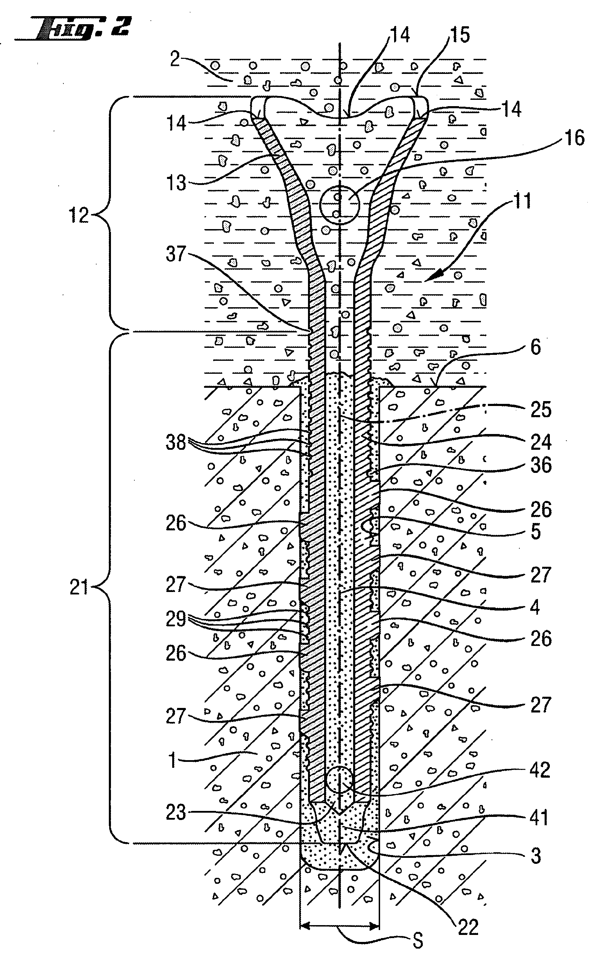

Wie aus der Fig. 2 und Fig. 3 ersichtlich stehen die Haltevorsprünge 26, 27 über die Aussenseite des Schaftes 24 vor. Der Überstand 46 ist derart gewählt, dass der Aussendurchmesser D des Befestigungsteils 21 grösser als der Durchmesser S des Sacklochs 3 ist. Der Aussendurchmesser d des Schaftes 24 ist kleiner als der Durchmesser S des Sacklochs 3 ausgebildet, so dass nach dem Eintreiben des Eingussdübels 11 ein Ringspalt zwischen der Aussenseite des Schaftes 24 und der Wandung 5 des Sacklochs 3 vorhanden ist.

Anhand insbesondere der Fig. 2 wird nachfolgend die Herstellung einer form- und kraftschlüssigen Verbindung zwischen einem ersten Festkörper 1 und einem zweiten Festkörper 2 mit dem erfindungsgemässen Eingussdübel 11 beschrieben.

Im bestehenden ersten Festkörper 1 werden gemäss den statischen Anforderungen Sacklöcher 3 in vorbestimmten Abständen und gleichmässiger Tiefe erstellt. Mittels manueller oder maschineller Schlagenergie wird der Eingussdübel 11 in das Sackloch 3 bis zum Erreichen der gewünschten Einbindetiefe desselben beziehungsweise bis zum Erreichen der gewünschten Ausrichtung eingetrieben. Dabei schaffen die furchenden Haltevorsprünge 26, 27 eine form- und reibschlüssige Verbindung zwischen dem Eingussdübel 11 und dem Sackloch 3. Der gesetzte Eingussdübel 11 ist bereits in diesem Montagezustand belastbar.

Durch den offenen Bereich des Einbettungsteils 12 wird die temporär fliessfähige, aushärtbare Substanz 4 durch den Schaft 24 in das Sackloch 3 eingebracht. Die temporär fliessfähige, aushärtbare Substanz 4 tritt aus der Öffnung 23, der Ausnehmungen 41 und der Bohrungen 42 im beziehungsweise am freien Endbereich 22 des Befestigungsteil 21 aus und steigt im Ringspalt zwischen der Aussenseite des Schaftes 24 und der Wandung 5 des Sackloches 3 zur Oberfläche 6 des ersten Festkörpers 1. Das Aufsteigen der temporär fliessfähigen, aushärtbaren Substanz 4 wird durch die versetzte Anordnung der Haltevorsprünge 26, 27 und den wendelfömig verlaufenden Führungselementen 29 unterstützt. Sobald die temporär fliessfähige, aushärtbare Substanz 4 an der Oberfläche 6 des ersten Festkörpers 1 austritt, ist das Sackloch 3 vollständig verfüllt.

## Patentansprüche

1. Eingussdübel zur gegenseitigen zugfesten Verbindung zweier Festkörper im Beton-Beton-Verbund mit einem radial auskragenden Einbettungsteil (12), und mit einem Befestigungsteil (21), wobei das Befestigungsteil (21) unter Ausbildung eines Schafts (24) hohlzylindrisch ausgebildet ist, **dadurch gekennzeichnet, dass** an der Aussenseite des Schafts (24) mehrere, zueinander beabstandete und parallel zu der Längsachse (25) des Eingussdübels (11) verlaufende furchende Haltevorsprünge (26, 27) angeordnet sind.

2. Eingussdübel nach Anspruch 1, **dadurch gekennzeichnet, dass** die Haltevorsprünge (26, 27) in Gruppen linear hintereinander liegend angeordnet sind, wobei optional die Haltevorsprünge (26, 27) zur Schaffung eines Zwischenraums (28) zwischen benachbarten Haltevorsprünge (26, 27) zueinander beabstandet sind.

3. Eingussdübel nach Anspruch 2, **dadurch gekennzeichnet, dass** zumindest drei Gruppen von Haltevorsprüngen (26, 27) an dem Umfang des Schafts (24) des Befestigungsteils (21) radial versetzt angeordnet sind.

4. Eingussdübel nach Anspruch 2 oder 3, **dadurch gekennzeichnet, dass** die Gruppen von Haltevorsprüngen (26, 27) axial zueinander versetzt sind.

5. Eingussdübel nach einem der Ansprüche 1 bis 4, **dadurch gekennzeichnet, dass** die Haltevorsprünge (26, 27) in Richtung eines freien Endes (22) des Befestigungsteils (21) rampenförmig ausgebildet sind.

6. Eingussdübel nach einem der Ansprüche 1 bis 5, **dadurch gekennzeichnet, dass** an dem Schaft (24) des Befestigungsteils (21) wendelförmig verlaufende, optional als durchlaufende Rippen ausgebildete, Führungselemente (29) vorgesehen sind.

7. Eingussdübel nach Anspruch 6, **dadurch gekennzeichnet, dass** die wendelförmig verlaufenden Führungselemente (29) in einem Zwischenraum (28) zwischen benachbarten Haltevorsprüngen (26, 27) einer Gruppe angeordnet sind.

8. Eingussdübel nach einem der Ansprüche 1 bis 7, **dadurch gekennzeichnet, dass** an dem Schaft (24) des Befestigungsteils (21) im Wesentlichen quer zur Längsachse (25) des Eingussdübels (11) verlaufende Markierungen (36, 37, 38) zur Anzeige einer Einbindetiefe des Eingussdübels (11) vorgesehen sind, wobei optional die Markierungen (36, 37, 38) als Vertiefungen ausgebildet sind.

9. Eingussdübel nach einem der Ansprüche 1 bis 8, **dadurch gekennzeichnet, dass** am freien Ende (22) des Befestigungsteils (21) zumindest eine Ausnehmung (41) vorgesehen ist.

10. Eingussdübel nach einem der Ansprüche 1 bis 9, **dadurch gekennzeichnet, dass** im Bereich des freien Endes (22) des Befestigungsteils (21) zumindest eine Bohrung (42) vorgesehen ist.

11. Eingussdübel nach einem der Ansprüche 1 bis 10, **dadurch gekennzeichnet, dass** der Eingussdübel (11) einteilig, optional in einem Sandgussverfahren, gefertigt ist.

## Claims

1. Embedded dowel for a mutual high-tensile joint between two solid bodies in a concrete-concrete composite, with a radially flared embedded part (12) and a fixing part (21), the fixing part (21) being formed as a hollow cylinder forming a shank (24), **characterized in that** a plurality of form-cutting retaining projections (26, 27), spaced apart from each other and extending parallel with the longitudinal axis (25) of the embedded dowel (11), are disposed on the exterior of the shank (24).

2. Embedded dowel according to Claim 1, **characterized in that** the retaining projections (26, 27) are arranged linearly one behind the other in sets, and optionally are spaced apart from each other so as to create a gap (28) between adjacent projections (26, 27).

3. Embedded dowel according to Claim 2, **characterized in that** at least three sets of retaining projections (26, 27) are disposed, radially staggered, around the circumference of the shank (24) of the fixing part (21).

4. Embedded dowel according to Claim 2 or Claim 3, **characterized in that** the sets of retaining projections (26, 27) are axially staggered.

5. Embedded dowel according to any one of Claims 1 to 4, **characterized in that** the retaining projections (26, 27) are formed as ramps towards the free end (22) of the fixing part (21).

6. Embedded dowel according to any one of Claims 1 to 5, **characterized in that** helically extending guide elements (29), optionally formed as continuous ribs, are provided on the shank (24) of the fixing part (21).

7. Embedded dowel according to Claim 6, **characterized in that** the helically extending guide elements (29) are arranged in the gap (28) between adjacent retaining projections (26, 27) of a set.

8. Embedded dowel according to any one of Claims 1 to 7, **characterized in that** marks (36, 37, 38) to indicate the depth of bonding-in of the embedded dowel (11), extending substantially transversely with respect to the longitudinal axis (25) of the embedded dowel (11), are provided on the shank (24) of the fixing part (21), these marks (36, 37, 38) optionally being formed as indentations.

9. Embedded dowel according to any one of Claims 1 to 8, **characterized in that** at least one recess (41) is provided at the free end (22) of the fixing part (21).

10. Embedded dowel according to any one of Claims 1 to 9, **characterized in that** at least one hole (42) is provided in the region of the free end (22) of the fixing part (21).

11. Embedded dowel according to any one of Claims 1 to 10, **characterized in that** the embedded dowel (11) is made in one piece, optionally in a sand casting process.

## Revendications

1. Goujon noyé à utiliser dans une liaison béton à béton pour raccorder mutuellement deux corps solides de manière résistante à la traction, comportant une partie pouvant être noyée (12) faisant radialement saillie vers l'extérieur, et une partie de fixation (21), la partie de fixation (21) se présentant sous la forme d'une tige cylindrique creuse (24), **caractérisé en ce que** plusieurs saillies de retenue striées (26, 27) espacées les unes des autres et parallèles à l'axe longitudinal (25) du goujon noyé (11) sont agencées sur le côté extérieur de la tige (24).

2. Goujon noyé selon la revendication 1, **caractérisé en ce que** les saillies de retenue (26, 27) sont agencées par groupes, linéairement les unes derrière les autres, les saillies de retenue (26, 27) étant facultativement espacées les unes des autres pour créer un espace intermédiaire (28) entre des saillies de retenue (26, 27) voisines.

3. Goujon noyé selon la revendication 2, **caractérisé en ce qu'**au moins trois groupes de saillies de retenue (26, 27) sont agencés de manière radialement décalée sur la périphérie de la tige (24) de la partie de fixation (21).

4. Goujon noyé selon la revendication 2 ou 3, **caractérisé en ce que** les groupes de saillies de retenue (26, 27) sont axialement décalés les uns par rapport aux autres.

5. Goujon noyé selon l'une quelconque des revendications 1 à 4, **caractérisé en ce que** les saillies de retenue (26, 27) sont configurées sous forme de rampes dans une direction d'une extrémité libre (22) de la partie de fixation (21).

6. Goujon noyé selon l'une quelconque des revendications 1 à 5, **caractérisé en ce que** des éléments de guidage (29) s'étendant sous forme d'hélice, facultativement configurés sous forme de nervures continues, sont prévus sur la tige (24) de la partie de fixation (21).

7. Goujon noyé selon la revendication 6, **caractérisé en ce que** les éléments de guidage (29) s'étendant sous forme d'hélice sont agencés dans un espace intermédiaire (28) entre des saillies de retenue (26, 27) voisines d'un groupe.

8. Goujon noyé selon l'une quelconque des revendications 1 à 7, **caractérisé en ce que** des marquages (36, 37, 38) s'étendant de manière sensiblement transversale à l'axe longitudinal (25) du goujon noyé (11) sont prévus sur la tige (24) de la partie de fixation (21) pour indiquer une profondeur de prise du goujon noyé (11), les marquages (36, 37, 38) étant facultativement configurés sous forme d'entailles.

9. Goujon noyé selon l'une quelconque des revendications 1 à 8, **caractérisé en ce qu'**au moins un évidement (41) est prévu sur l'extrémité libre (22) de la partie de fixation (21).

10. Goujon noyé selon l'une quelconque des revendications 1 à 9, **caractérisé en ce qu'**au moins un alésage (42) est prévu dans la zone de l'extrémité libre (22) de la partie de fixation (21).

11. Goujon noyé selon l'une quelconque des revendications 1 à 10, **caractérisé en ce que** le goujon noyé (11) est fabriqué d'un seul tenant, facultativement pour un procédé de moulage en sable.
